# EUROPÄISCHE PATENTSCHRIFT

(11) **EP 3 141 767 B1**
(45) Veröffentlichungstag und Bekanntmachung des Hinweises auf die Patenterteilung: **26.12.2018**
(21) Anmeldenummer: 16187001.9
(22) Anmeldetag: 02.09.2016
(51) Int. Cl.: F16B 13/12

(54) **BEFESTIGUNGSSYSTEM, UMFASSEND EINEN NAGELDÜBEL UND EINEN KUNSTSTOFFSPREIZNAGEL**
FASTENING SYSTEM, COMPRISING A DOWEL SECURED BY A NAIL AND A PLASTIC SPREADING NAIL
SYSTEME DE FIXATION, COMPRENANT UNE CHEVILLE A FRAPPER ET CLOU A ECARTEMENT FORCE EN MATIERE PLASTIQUE

(30) Priorität: 10.09.2015 DE 102015217355
(43) Veröffentlichungstag der Anmeldung: 15.03.2017
(73) Patentinhaber: Gräwe, Bernd, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A1- 2 759 717
- EP-A2- 2 549 127
- DE-A1- 3 151 029
- DE-A1- 4 320 334
- DE-A1-102013 101 189
- DE-U1-202006 005 988

## Beschreibung

Die Erfindung betrifft ein Befestigungsmittel zur Anbringung von Bauteilen, wie Dämmstoffplatten und dergleichen Dämmmittel oder Holz-Unterkonstruktionen an einen tragenden Untergrund, umfassend eine mit einer Spreizzone ausgebildete Dübelhülse und einen Kunststoffspreiznagel, der in Montagerichtung verlaufende Führungsrippen und an seinem in Montagerichtung vorderen Ende einen beim Einschlagen die Spreizzone der Dübelhülse radial aufweitenden, gewinderartigen Spreizabschnitt aufweist, wobei in ein durch das Bauteil bis in den Untergrund vorgebohrtes Loch, von denen abhängig von den Bauteilabmessungen mehrere vorgesehen werden, die Dübelhülse eingebracht und durch Einschlagen des Kunststoffspreiznagels im Untergrund verankert wird. Ein solches Befestigungsmittel ist durch die EP 2 549 127 A2 bekannt geworden, wobei der Nagelschaft des Spreiznagels aus Kunststoff besteht, während sein vorderer Spreizabschnitt metallisch und gewindeartig ausgebildet ist.

Bisherige Nageldübel, ausgeführt als Dübelhülsen, mit Kunststoffspreiznagel zum Befestigen von Bauteilen an einen Untergrund neigen dazu, während des Einschlagens zu zerbrechen, wobei die Bruchstelle in der Regel am Übergang des zylindrischen Nagelschafts zum gewindeartigen Spreizabschnitt des Kunststoffnagels auftritt.

Je tiefer der Nagel in die Dübelspreizzone geschlagen wird, umso höher wird die notwendige Eintreibkraft. Dem wirkt allerdings der entstehende Spreizdruck entgegen. Daher biegt sich der Kunststoffnagel und es kommt zum Bruch.

Die für solche Einschlagnägel benutzten Kunststoffe haben einen hohen Glasfaseranteil, um eine hohe Steifigkeit zu erreichen. Je höher der Glasfaseranteil ist umso steifer ist der Kunststoffnagel, gleichzeitig erhöht sich aber die Bruchempfindlichkeit. Leider liegt die Bruchdehnung bei solchen Kunststoffen in der Regel bei unter 5 %, so dass Kunststoff kein Stahlersatz ist.

Soll nun ein solcher Nageldübel funktionsfähig sein, muss der Spreizdruck verringert werden. Dies bedeutet jedoch, dass sehr geringe Festigkeiten vorliegen würden. Die Auszugshaltekräfte sind dann in der Regel nicht mehr akzeptabel.

Aus der EP 1 298 330 B1 ist ein Befestigungsmittel der eingangs genannten Art bekannt. Der Nageldübel bzw. die Dübelhülse besteht aus einem Druck- bzw. Halteteller, dem sich ein Hohlschaft anschließt, der in eine endseitig einen geschlossenen Boden aufweisende Spreizzone mit einem gegenüber dem Hohlschaft geringeren, dem Durchmesser des vorgebohrten Lochs entsprechenden Durchmesser übergeht. Der Kunststoffspreiznagel bzw. -dorn hat an seinem in Montagerichtung hinteren Ende eine Rippenkonstruktion, deren mit dem Hohlschaft der Dübelhülse zusammenwirkenden Rippen / Stege bis vor einen gewindeartigen, mit Hakenelementen - in der Praxis ausgebildet als Rillengewinde - versehenen, in situ die Spreizzone der Dübelhülse radial weitenden Spreizabschnitt reichen. Die Innenkontur des Hohlschafts der Dübelhülse ist passend zur Kontur der Rippenkonstruktion des Spreiznagels ausgebildet.

Abgesehen davon, dass bei dem Kunststoffspreiznagel die Bruchgefahr am Übergang der Rippenkonstruktion zum gewindeartigen Spreizabschnitt unvermeidlich ist, eignet sich dieses bekannte Befestigungsmittel nicht für eine Durchsteckmontage. Der Hohlschaft der Dübelhülse hat ein wesentlich größeres Außenmaß als das vorgebohrte Loch.

Durch die EP 2 759 717 A1 wird ein Wanddübel offenbart, der ein längliches Hohlrohr und ein längliches Element aufweist. Das längliche Element hat zwei diametral gegenüberliegende Vorsprünge und das Hohlrohr zwei sich in der Längsrichtung erstreckende Spalten. Abgesehen davon, dass eine völlig andere Problemstellung zugrunde liegt, nämlich Feuchtigkeitseinschlüsse in dem Befestigungselement zu vermeiden, sollen sich die Vorsprünge bzw. Rippen des länglichen Elementes an die Innenwandung des aufzuspreizenden Hohlrohres anlegen. Die Spreizung wird durch die Spalten begünstigt.

Der Erfindung liegt daher die Aufgabe zugrunde, ein gattungsgemäßes Befestigungsmittel ohne die genannten Nachteile mit erhöhter Bedienungssicherheit und insbesondere deutlich verringerter Bruchgefahr sowie gleichzeitig besseren Festigkeitswerten zu schaffen.

Diese Aufgabe wird erfindungsgemäß dadurch gelöst, dass der Kunststoffspreiznagel mit mindestens zwei, diametral zueinander vorgesehenen, versteifenden Führungsrippen ausgebildet ist, die von unterhalb des Nagelkopfes den Spreizabschnitt überstreichend bis zur Nagelspitze durchgehend verlaufen, wobei die versteifenden Führungsrippen eine von der Außenkante der einen Rippe bis zur Außenkante der anderen Rippe gemessene Breite aufweisen, die etwa dem Außendurchmesser der Dübelhülse entspricht, jedoch nicht größer als der Durchmesser des vorgebohrten Loches ist und wobei die Dübelhülse zur Aufnahme der versteifenden Führungsrippen an zumindest zwei gegenüberliegenden Seiten einen von unterhalb des Dübelkopfes bis zur Dübelspitze durchgehenden Längsschlitz aufweist, wobei die Führungsrippen in die Längsschlitze der Dübelhülse eintauchen.

Durch die über den Ort des Geschehens, d. h. der Bruchstelle im Übergang zum Spreizabschnitt, durchgehenden Führungsrippen läßt sich im Zusammenspiel mit den Längsschlitzen der Dübelhülse, in die die Führungsrippen eintauchen, einerseits eine solche Versteifung und Festigkeit des Kunststoffspreiznagels erreichen, dass dieser beim Einschlagen nicht zu Bruch gehen kann. Andererseits liegt trotz der durchgehenden, versteifenden Führungsrippen eine Dübelhülse mit einem über die gesamte Länge einheitlichen, nicht mehr gestuften Außendurchmesser vor, weil die Führungsrippen bis zur Dübelspitze bzw. bis zum Dübelende und somit auch in der Spreizzone in die Längsschlitze eingreifen, ohne aus diesen nach außen vorzuspringen.

Eine bevorzugte Ausführung der Erfindung sieht vor, dass der Kunststoffspreiznagel um 90° versetzt zu den versteifenden Führungsrippen mit zwei diametral zueinander angeordneten Längsstegen ausgebildet ist, die durchgehend bis zumindest zu seinem Spreizabschnitt verlaufen und eine von der Außenkante des einen Steges bis zur Außenkante des anderen Steges gemessene Breite aufweisen, die geringer als die Breite der versteifenden Führungsrippen ist und etwa dem Innendurchmesser der Dübelhülse entspricht.

Die Längsstege können sich hierbei nach vorteilhaften Ausgestaltungen bis zur Nagelspitze oder bis zum Spreizabschnitt erstrecken oder oberhalb des gewindeartigen Spreizabschnitts enden. Auf jeden Fall bieten die sich an den inneren Wandbereich der Dübelhülse anlegenden Längsstege beim Einschlagen des Kunststoffspreiznagels eine ergänzende, zusätzliche Abstützung, was zur Präzision beim Einschlagen beiträgt.

Eine weitere Ausgestaltung der Erfindung sieht vor, dass die Dübelhülse mit einem Halte-/Druckteller ausgebildet werden kann, wie bei Wärmedämmverbundsystemen (WDVS) zur Befestigung von Dämmstoffplatten oder dergleichen. Dämmmittel, z. B. Polystyrolplatten oder hoch verdichtete Steinwolleplatten, üblich.

Eine bei Verwendung einer Dübelhülse mit Halteteller bevorzugte Ausführung der Erfindung ist gekennzeichnet durch einen Halteteller mit daran angeformtem Hohlschaft und eine kopfseitig mit einer in den Hohlschaft eintauchenden Hülsenschaftvergrößerung ausgebildete Dübelhülse, wobei die Längsschlitze von unterhalb der Hülsenschaftvergrößerung bis zum Dübelhülsenende verlaufen und der Kunststoffspreiznagel einen an den Innendurchmesser des Hohlschafts des Haltetellers angepaßten Dübelkopf aufweist, dem sich die bis zur Nagelspitze verlaufenden, versteifenden Führungsrippen und demgegenüber deutlich kürzere, oberhalb des Spreizabschnitts endende Längsstege anschließen.

Unter Beibehalt der schon genannten, erfindungsgemäß erreichten Vorteile läßt sich damit bei der Befestigung von Dämmstoffplatten ein Teleskopieren des Hohlschafts auf der Hülsenschaftvergrößerung bzw. der Hülsenschaftvergrößerung in dem Hohlschaft ermöglichen.

Wenn in den Längsschlitzen der Dübelhülse im Bereich der Spreizzone Querstege vorgesehen sind, werden die Dübelhälften, solange der Spreiznagel noch nicht eingeschlagen worden ist, d. h. im Anlieferungszustand bis zur Montage, zusammen gehalten.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: eine erste Gesamtansicht a) und eine zweite, gegenüber a) um 90° gedrehte Gesamtansicht b) eines Kunststoffspreiznagels mit rechts neben der Gesamtansicht b) zwei Querschnitten;
- Fig. 2: eine erste Gesamtansicht a) und eine zweite, gegenüber a) um 90° gedrehte Gesamtansicht b) einer Dübelhülse, unterhalb von a) als Draufsicht;
- Fig. 3: eine Gesamtansicht einer anderen Ausführung eines Kunststoffspreiznagels mit rechts davon zwei Querschnitten;
- Fig. 4: als Gesamtansicht den mit einer Dübelhülse nach Fig. 2 vormontierter Kunststoffspreiznagel der Fig. 3;
- Fig. 5: als Gesamtansicht den Kunststoffspreiznagel der Fig. 3 vormontiert mit einer eine Halteplatte aufweisenden Dübelhülse der Ausführung nach Fig. 2;
- Fig. 6.: als Gesamtansicht eine weitere Ausführung einer Dübelhülse, die aus einem Halteteller mit einem Hohlschaft und einem mit einer Hülsenschaftvergrößerung im Hohlschaft angeordneten Dübelhülsenschaft besteht;
- Fig. 7: die Dübelhülse der Fig. 6 in einem Längsschnitt;
- Fig. 8: eine erste Gesamtansicht a) und eine zweite, gegenüber a) um 90° gedrehte Gesamtansicht b) eines für die Dübelhülse der Fig. 8 geeigneten Kunststoffspreiznagels, rechts neben b) mit zwei Querschnitten;
- Fig. 9: als Teilansicht die Befestigung einer Holz-Unterkonstruktion (Dachlatte) an einen Mauerwerk-Untergrund mit einer Nagel-DübelKombination umfassend einen Kunststoffspreiznagel der Fig. 1 und eine Dübelhülse der Fig. 2;
- Fig. 10: als Teilansicht die Befestigung einer Wärmedämmplatte an einen Mauerwerk-Untergrund mit einer Nagel-Dübel-Kombination wie in Fig. 5 dargestellt;
- Fig. 11: als Teilansicht eines Wärmedämmverbundsystems (WDVS) die Befestigung einer Wärmedämmplatte an einen Mauerwerk-Untergrund mit einer Nagel-Dübelkombination umfassend einen Kunststoffspreiznagel nach Fig. 8 und eine Dübelhülse nach Fig. 6 / 7, dargestellt im eingesetzten Vormontagezustand; und
- Fig. 12: die Nagel-Dübel-Kombination der Fig. 10 im teleskopierten Endmontagezustand, wobei der Halteteller bündig mit der Oberfläche der Wärmedämmplatte verläuft bzw. abschließt.

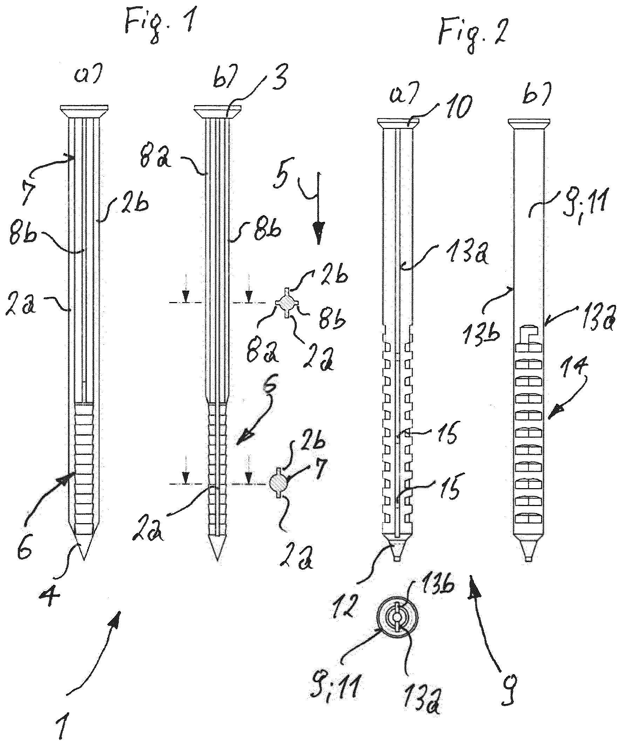

Ein in Fig. 1 dargestellter Kunststoffspreiznagel 1 ist mit zwei diametral zueinander vorgesehenen, versteifenden Führungsrippen 2a, 2b ausgebildet, die von unterhalb des Nagelkopfes 3 durchgehend bis zur Nagelspitze 4 verlaufend und damit den in Montagerichtung 5 vorderen, gewindeartigen Spreizabschnitt 6 des Spreiznagels 1 überstreichend ausgebildet sind. Um 90° versetzt zu den Führungsrippen 2a, 2b sind auf dem Nagelkern 7 weiterhin auch zwei Längsstege 8a, 8b angeordnet, die sich von unterhalb des Nagelkopfes 3 bis hier im Ausführungsbeispiel zum Spreizabschnitt 6 erstrecken.

Einer in Fig. 2 dargestellten Dübelhülse 9 schließt sich unterhalb des Dübelkopfes 10 ein über seine gesamte Länge einen einheitlichen Durchmesser aufweisender Dübelhülsenschaft 11 an, der ausgehend vom Kopfende mit bis zur Dübelspitze 12 bzw. zum Dübelhülsenschaftende an zwei gegenüberliegenden Seiten verlaufenden Längsschlitzen 13a, 13b ausgebildet ist. In der sich am vorderen Ende der Dübelhülse 9 bzw. des Dübelhülsenschaftes 11 befindenden Spreizzone 14 sind im Abstand übereinander Querstege 15 in den Längsschlitzen 13a, 13b angeordnet, die die beiden aufgrund der Längsschlitze 13a, 13b getrennten Dübelhälften bis zum Montageeinsatz zusammenhalten.

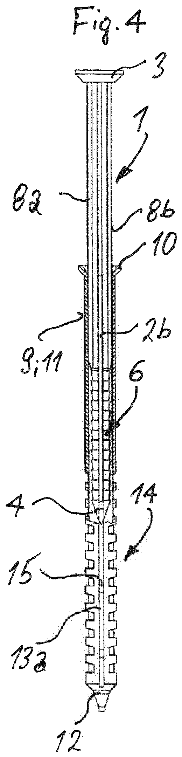

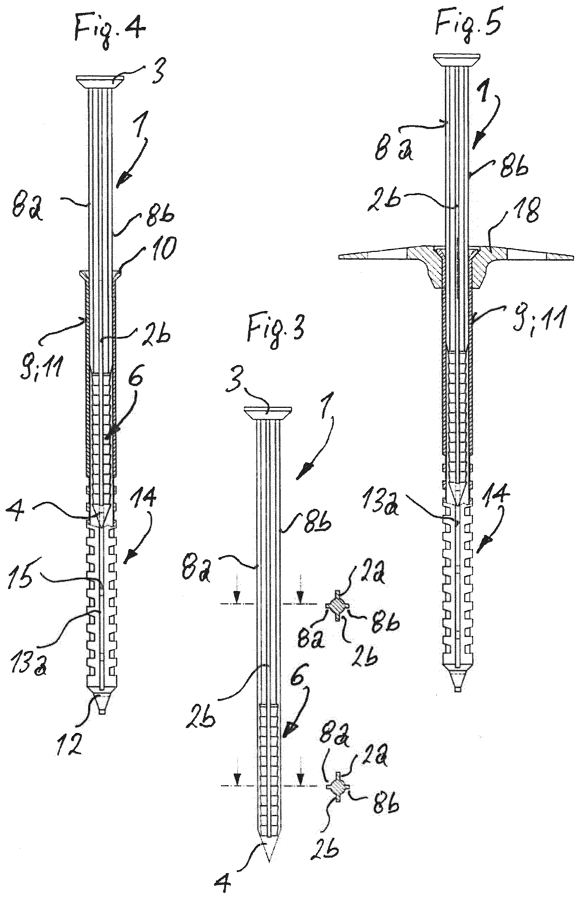

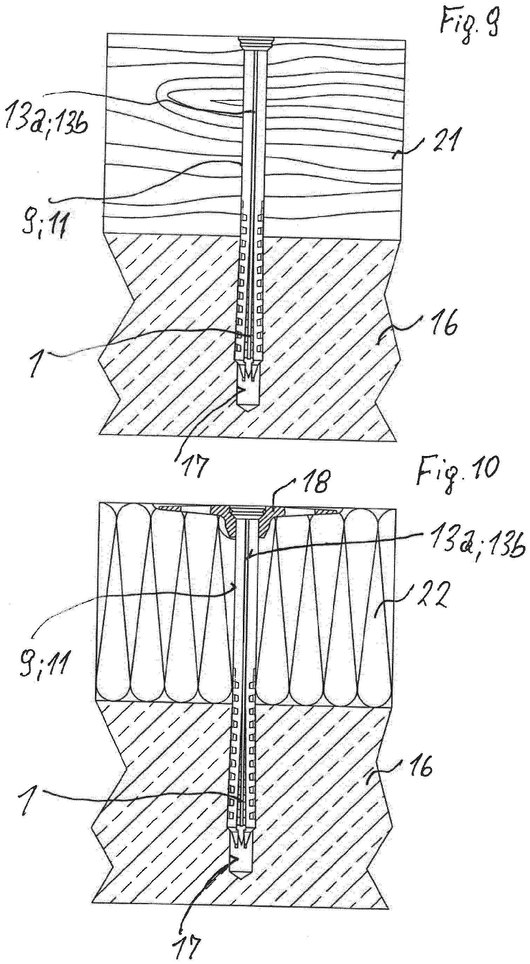

Die versteifenden Führungsrippen 2a, 2b des Spreiznagels 1 besitzen eine von der Außenkante der einen Rippe 2a bis zu Außenkante der anderen Rippe 2b gemessene Breite, die etwa dem Außendurchmesser der Dübelhülse 9 bzw. des Dübelhülsenschafts 11 entspricht und nicht größer als der Durchmesser des zur Montage bis in den Untergrund 16 vorgebohrten Lochs 17 (vgl. z. B. Fig. 9) ist. Demgegenüber besitzen die Längsstege 8a, 8b eine von Außenkante zu Außenkante gemessene Breite, die geringer als die gemessene Breite der versteifenden Führungsrippen 2a, 2b ist (vgl. in Fig. 1 bei b) die obere Querschnittsdarstellung) und etwa dem Innendurchmesser der Dübelhülse 9 bzw. des Dübelhülsenschafts 11 entspricht. Zur Montage wird der Spreiznagel 1 in die Dübelhülse 9 gesteckt (vgl. z. B. Fig. 4), wobei die Führungsrippen 2a, 2b in die Längsschlitze 13a, 13b der Dübelhülse 9 eingreifen und sich die Längsstege 8a, 8b an der Innenwandung des Dübelhülsenschafts 11 abstützen.

Der Spreiznagel 1 wird während des gesamten Einschlagvorgangs von den sich bis über die Spreizzone 14 erstreckenden, in den Längsschlitzen 13a, 13b zentrierten Rippen 2a, 2b geführt und außerdem durch die Längsstege 8a, 8 b gegen die Dübelhülse 1 abgestützt.

Unter Beibehaltung aller vorbeschriebenen Funktionen und Wirkungen unterscheiden sich die weiteren Ausführungsbeispiele nach den Fig. 3 bis 8 dadurch, daß bei dem Kunststoffspreiznagel 1 der Fig. 3 bis 5 auch die Längsstege 8a, 8b bis zur Dübelspitze 12 durchgehend ausgebildet sind (vgl. Fig. 3, dort auch die Querschnittsdarstellungen) bzw. der Dübelhülsenschaft 11 mit einem Halteteller 18 (vgl. Fig. 5) ausgebildet ist.

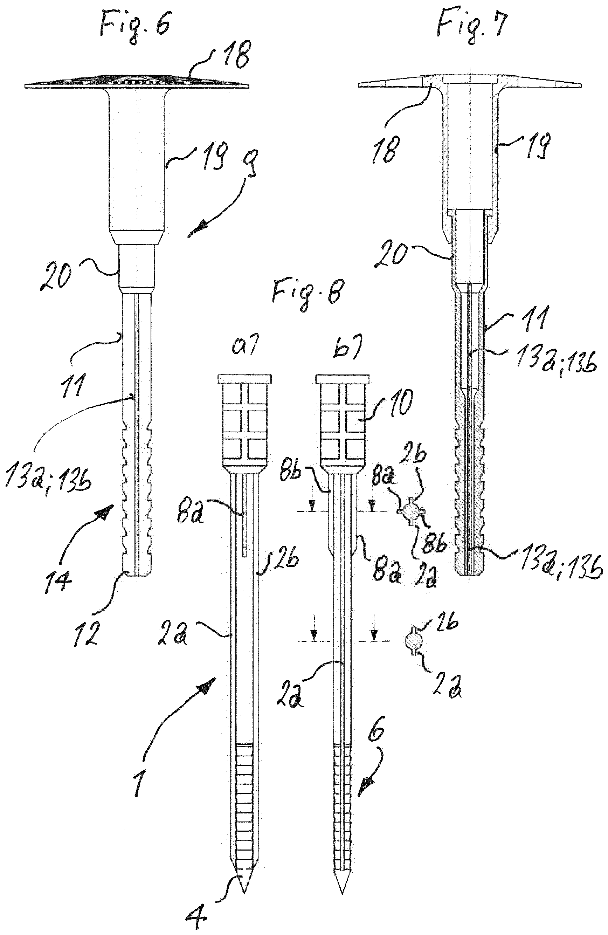

Bei dem insbesondere für ein Wärmedämmverbundsystem geeigneten Befestigungsmittel der Fig. 6 bis 8 schließt sich dem Halteteller 18 in Montagerichtung 5 ein Hohlschaft 19 an, in dem der Dübelhülsenschaft 11 mit einer angepaßten Hülsenschaftvergrößerung 20 mit gegenüber dem Hohlschaft 19 relativer, teleskopierbarer Verschiebungsmöglichkeit angeordnet ist. Der Kunststoffspreiznagel 1 besitzt einen der Innenkontur des Hohlschafts 19 angepaßten, im Vergleich zu den vorbeschriebenen Ausführungen deutlich größer bemessenen Dübelkopf 10 und die Längsstege 8a, 8b enden deutlich oberhalb der Spreizzone 14, wobei sie sich bei der Montage an der Innenwandung der Hülsenschaftvergrößerung 20 abstützen.

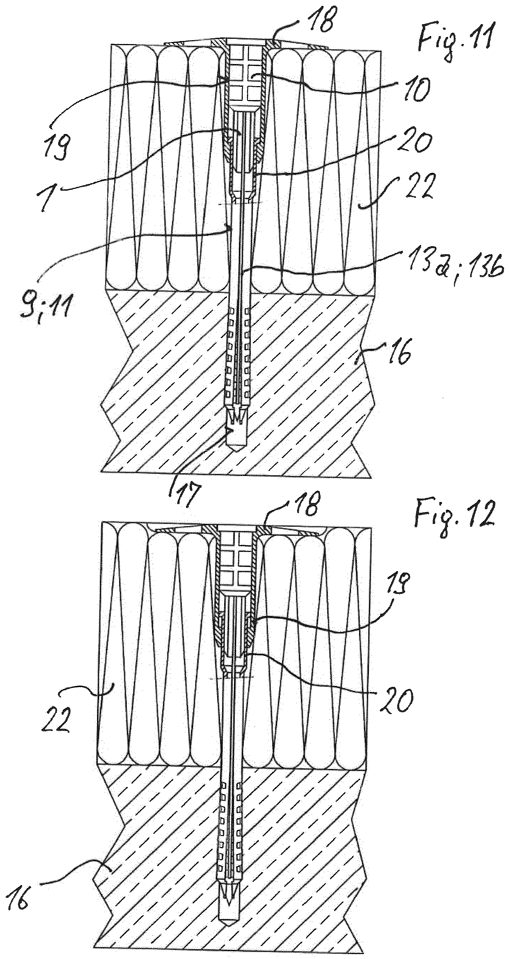

In den Fig. 9 bis 12 sind einige Montagebeispiele dargestellt. Eine Holz-Unterkonstruktion (Dachlatte) 21 ist gemäß Fig. 9 mit einer Dübelhülse 9 wie in Fig. 2 gezeigt mit einem wie in den Fig. 1 oder 3 gezeigten Kunststoffspreiznagel 1, der die Spreizzone 14 der Dübelhülse 9 radial geweitet hat, im vorgebohrten Loch 17 des Untergrunds 16 verankert worden. Nach Fig. 10 ist in der gleichen Weise eine Wärmedämmplatte 22 mit einer einen Halteteller 18 aufweisenden Dübelhülse 9 (vgl. Fig. 5) am Untergrund 16 befestigt worden. Der Halteteller 18 schließt bündig mit der Oberfläche der Wärmedämmplatte 22 ab. Das ist so auch bei der Montage nach den Fig. 11 und 12 der Fall. Dort ist eine in den Fig. 6, 7 gezeigte Dübelhülse 9 und ein in Fig. 8 gezeigter Kunststoffspreiznagel 1 zur Befestigung der Wärmedämmplatte 22 verwendet worden. Zur Fertigmontage hat sich der gemäß Fig. 11 noch auf der Wärmedämmplatte 22 mit Überstand aufliegende Halteteller 18 im teleskopierten Zustand, wie in Fig. 12 dargestellt, bis zum bündigen Abschluss mit der Oberfläche der Wärmedämmplatte 22 abgesenkt, wobei sich der Hohlschaft 19 gegenüber der Hülsenschaftvergrößerung 20 verschoben hat.

### Bezugszeichenliste

- 1: Kunststoffspreiznagel / Spreiznagel
- 2a, 2b: versteifende Führungsrippe
- 3: Nagelkopf
- 4: Nagelspitze
- 5: Montagerichtung (Pfeil)
- 6: (gewindeartiger) Spreizabschnitt
- 7: Nagelkern
- 8a, 8b: Längssteg
- 9: Dübelhülse
- 10: Dübelkopf
- 11: Dübelhülsenschaft
- 12: Dübelspitze / Dübelhülsenschaftende
- 13a, 13b: Längsschlitz
- 14: Spreizzone
- 15: Quersteg
- 16: Untergrund (Mauerwerk)
- 17: vorgebohrtes Loch
- 18: Halteteller
- 19: Hohlschaft
- 20: Hülsenschaftvergrößerung
- 21: Holz-Unterkonstruktion / Bauteil
- 22: Wärmedämmplatte / Bauteil

## Patentansprüche

1. Befestigungsmittel zur Anbringung von Bauteilen, wie Dämmstoffplatten (22) und dergleichen Dämmmittel oder Holz-Unterkonstruktionen (21) an einen tragenden Untergrund (16), umfassend eine mit einer Spreizzone (14) ausgebildete Dübelhülse (9; 11) und einen Kunststoffspreiznagel (1), der in Montagerichtung (5) verlaufende Führungsrippen (2a, 2b) und an seinem in Montagerichtung (5) vorderen Ende einen beim Einschlagen die Spreizzone (14) der Dübelhülse (9; 11) radial aufweitenden, gewinderartigen Spreizabschnitt (6) aufweist, wobei in ein durch das Bauteil (21; 22) bis in den Untergrund (16) vorgebohrtes Loch (17), von denen abhängig von den Bauteilabmessungen mehrere vorgesehen werden, die Dübelhülse (9; 11) eingebracht und durch Einschlagen des Kunststoffspreiznagels (1) im Untergrund (16) verankert wird, wobei der Kunststoffspreiznagel (1) mit mindestens zwei, diametral zueinander vorgesehenen, versteifenden Führungsrippen (2a, 2b) ausgebildet ist, die von unterhalb des Nagelkopfes (3) den Spreizabschnitt (6) überstreichend bis zur Nagelspitze (4) durchgehend verlaufen, wobei die versteifenden Führungsrippen (2a; 2b) eine von der Außenkante der einen Rippe (2a) bis zur Außenkante der anderen Rippe (2b) gemessene Breite aufweisen die etwa den Außendurchmesser der Dübelhülse (9; 11) entspricht, jedoch nicht größer als der Durchmesser des vorgebohrten Loches (17) ist und wobei die Dübelhülse (9; 11) zur Aufnahme der versteifenden Führungsrippen (2a, 2b) an zumindest zwei gegenüberliegenden Seiten einen von unterhalb des Dübelkopfes (10) bis zur Dübelspitze (12) durchgehenden Längsschlitz (13a, 13b) aufweist, wobei die Führungsrippen (22, 26) in die Längsschlitze (13a, 13b) der Dübelhülse (9; 11) eintauchen.

2. Befestigungsmittel nach Anspruch 1,
**dadurch gekennzeichnet,**
**dass** der Kunststoffspreiznagel (1) um 90° versetzt zu den versteifenden Führungsrippen (2a, 2b) mit zwei diametral zueinander angeordneten Längsstegen (8a, 8b) ausgebildet ist, die durchgehend bis zumindest zu seinem Spreizabschnitt (6) verlaufen und eine von der Außenkante des einen Steges (8a) bis zur Außenkante des anderen Steges (8b) gemessene Breite aufweisen, die geringer als die Breite der versteifenden Führungsrippen (2a, 2b) ist und etwa dem Innendurchmesser der Dübelhülse (9; 11) entspricht.

3. Befestigungsmittel nach Anspruch 2,
**dadurch gekennzeichnet,**
**dass** sich die Längsstege (8a, 8b) bis zur Nagelspitze (4) erstrecken.

4. Befestigungsmittel nach Anspruch 2,
**dadurch gekennzeichnet,**
**dass** sich die Längsstege (8a, 8b) bis zum Spreizabschnitt (6) erstrecken oder beabstandet davon oberhalb enden.

5. Befestigungsmittel nach einem der Ansprüche 1 bis 4,
**dadurch gekennzeichnet,**
**dass** die Dübelhülse (9; 11) mit einem Halteteller (18) ausgebildet ist.

6. Befestigungsmittel nach Anspruch 5,
**gekennzeichnet dadurch, dass** der Halteteller (18) mit daran angeformtem Hohlschaft (19) ausgebildet ist und die Dübelhülse (9) kopfseitig mit einer in den Hohlschaft (19) eintauchenden Hülsenschaftvergrößerung (20) ausgebildet ist, wobei die Längsschlitze (13a, 13b) von unterhalb der Hülsenschaftsvergrößerung (20) bis zum Dübelhülsenende (12) verlaufen und der Kunststoffspreiznagel (1) einen an den Innendurchmesser des Hohlschafts (19) des Haltetellers (18) angepaßten Dübelkopf (10) aufweist, dem sich die bis zur Nagelspitze (4) verlaufenden, versteifenden Führungsrippen (2 a, 2b) und demgegenüber deutlich kürzere, oberhalb des Spreizabschnitts (6) endende Längsstege (8a, 8b) anschließen.

7. Befestigungsmittel nach einem der Ansprüche 1 bis 6,
**dadurch gekennzeichnet,**
**dass** in den Längsschlitzen (13a, 13b) der Dübelhülse (9; 11) im Bereich der Spreizzone (14) Querstege (15) vorgesehen sind.

## Claims

1. A fastening means for attaching components, such as insulation boards (22) and similar insulating material or wooden substructures (21) to a supporting subsurface (16), comprising an anchoring sleeve (9; 11) constructed with a spreading zone (14) and a plastic expansion nail (1), which has guide ribs (2a, 2b) running in the mounting direction (5) and, at the front end of the expansion nail in the mounting direction (5), a thread-like spreading section (6), which radially widens the spreading zone (14) of the anchoring sleeve (9; 11) when knocked in, the anchoring sleeve (9; 11) being introduced into a hole (17) pre-drilled through the component (21; 22) down into the subsurface (16), a plurality of such holes being provided depending on the component dimensions, and the anchoring sleeve being introduced and anchored in the subsurface (16) by knocking in the plastic expansion nail (1),
the plastic expansion nail (1) being constructed with at least two reinforcing guide ribs (2a, 2b) provided diametrically to one another, which run continuously from below the nail head (3) skimming the spreading section (6) up to the nail tip (4), the reinforcing guide ribs (2a; 2b) having a width measured from the outer edge of one rib (2a) to the outer edge of the other rib (2b), which approximately corresponds to the outer diameter of the anchoring sleeve (9; 11), but is not larger than the diameter of the pre-drilled hole (17), and the anchoring sleeve (9; 11) having a continuous longitudinal slot (13a, 13) from below the anchor head (10) to the anchor tip (12), for accommodating the reinforcing guide ribs (2a, 2b) on at least two opposite sides, the guide ribs (22, 26) dipping into the longitudinal slots (13a, 13b) of the anchoring sleeve (9; 11).

2. The fastening means according to Claim 1,
**characterized**
**in that** the plastic expansion nail (1) is constructed with two longitudinal webs (8a, 8b) arranged diametrically to one another, offset by 90° to the reinforcing guide ribs (2a, 2b), which longitudinal webs run continuously at least up to the spreading section (6) thereof and have a width measured from the outer edge of one web (8a) up to the outer edge of the other web (8b), which width is smaller than the width of the reinforcing guide ribs (2a, 2b) and corresponds approximately to the inner diameter of the anchoring sleeve (9; 11).

3. The fastening means according to Claim 2,
**characterized**
**in that** the longitudinal webs (8a, 8b) extend up to the nail tip (4).

4. The fastening means according to Claim 2,
**characterized**
**in that** the longitudinal webs (8a, 8b) extend up to the spreading section (6) or end thereabove, spaced therefrom.

5. The fastening means according to one of Claims 1 to 4,
**characterized**
**in that** the anchoring sleeve (9; 11) is constructed with a holding plate (18).

6. The fastening means according to Claim 5,
**characterized in that**
the holding plate (18) is constructed with a hollow shaft (19) formed thereon and the anchoring sleeve (9) is constructed at the head side with a sleeve shaft extension (20) dipping into the hollow shaft (19), wherein the longitudinal slots (13a, 13b) run from below the sleeve shaft extension (20) up to the anchoring sleeve end (12) and the plastic extension nail (1) has an anchor head (10) adapted to the inner diameter of the hollow shaft (19) of the holding plate (18), which anchor head is adjoined by the reinforcing guide ribs (2a, 2b), running up to the nail tip (4), and the longitudinal webs (8a, 8b), which are considerably shorter by contrast and end above the spreading section (6).

7. The fastening means according to one of Claims 1 to 6,
**characterized**
**in that** transverse webs (15) are provided in the longitudinal slots (13a, 13b) of the anchoring sleeve (9; 11) in the region of the spreading zone (14).

## Revendications

1. Moyen de fixation pour mettre en place des composants, comme des plaques de matériau isolant (22) et des moyens isolants analogues ou des substructures en bois (21) sur un fond porteur (16), comprenant une gaine de cheville (9,11) constituée avec une zone d'expansion (14) et une tige d'expansion en matière plastique (1) qui comporte des membrures de guidage (2a,2b) passant dans le sens du montage (5) et sur son extrémité avant dans le sens du montage (5) une section expansible (6) de type filetage, élargissant radialement lors de l'enfoncement la zone d'expansion (14) de la gaine de cheville (9,11), la gaine de cheville (9,11) étant introduite dans un trou (17) prépercé jusque dans le fond (16) à travers le composant (21,22), dont plusieurs sont prévus en fonction des dimensions du composant, et étant ancrée dans le fond (16) par enfoncement de la tige d'expansion en matière plastique (1), la tige d'expansion en matière plastique (1) étant constituée avec au moins deux membrures de guidage raidisseuses (2a,2b) prévues diamètralement l'une par rapport à l'autre, qui passent sur toute la longueur depuis le dessous de la tête de tige (3) en recouvrant la section d'expansion (6) jusqu'à la pointe de tige (4), les membrures de guidage raidisseuses (2a,2b) comportant une largeur mesurée du bord extérieur d'une membrure (2a) jusqu'au bord extérieur de l'autre membrure (2b) qui correspond à peu près au diamètre extérieur de la gaine de cheville (9,11), mais n'est toutefois pas plus grand que le diamètre du trou prépercé (17) et la gaine de cheville (9,11) comportant une fente longitudinale (13a,13b) continue sur au moins deux côtés opposés depuis le dessous de la tête de cheville (10) jusqu'à la pointe de cheville (12), les membrures de guidage (22,26) plongeant dans la fente longitudinale (13a, 13b) de la gaine de cheville (9,11) pour loger les membrures de guidage raidisseuses (2a,2b).

2. Moyen de fixation selon la revendication 1, **caractérisé en ce que** la tige d'expansion en matière plastique (1) est constituée décalée de 90° par rapport aux membrures de guidage raidisseuses (2a,2b) avec deux nervures longitudinales (8a,8b), qui passent sur toute la longueur jusqu'à au moins sa section d'expansion (6) et comportent une largeur mesurée du bord extérieur d'une nervure (8a) jusqu'au bord extérieur de l'autre nervure (8b), qui est plus faible que la largeur des membrures de guidage raidisseuses (2a,2b) et correspond à peu près au diamètre intérieur de la gaine de cheville (9,11).

3. Moyen de fixation selon la revendication 2, **caractérisé en ce que** les nervures longitudinales (8a,8b) s'étendent jusqu'à la pointe de la tige (4).

4. Moyen de fixation selon la revendication 2, **caractérisé en ce que** les nervures longitudinales (8a,8b) s'étendent jusqu'à la section d'expansion (6) ou se terminent au-dessus à distance de celle-ci.

5. Moyen de fixation selon l'une quelconque des revendications 1 à 4, **caractérisé en ce que** la gaine de cheville (9,11) est constituée avec une tête plate de retenue (18).

6. Moyen de fixation selon la revendication 5, **caractérisé en ce que** la tête plate de retenue (18) est constituée avec une tige creuse (19) conformée dessus et la gaine de cheville (9) est constitué côté tête avec un agrandissement de tige de gaine (20) plongeant dans la tige creuse (19), les fentes longitudinales (13a, 13b) passant depuis le dessous de l'agrandissement de tige de gaine (20) jusqu'à l'extrémité de gaine de cheville (12) et la tige d'expansion en matière plastique (1) comportant une tête de cheville (10) adaptée au diamètre intérieur de la tige creuse (19) de la tête plate de retenue (18) à laquelle se raccordent les membrures de guidage raidisseuses (2a,2b), passant jusqu'à la pointe de tige (4) et à l'opposé les nervures longitudinales (8a,8b) nettement plus courtes, se terminant au-dessus de la section d'expansion (6).

7. Moyen de fixation selon l'une quelconque des revendications 1 à 6, **caractérisé en ce que** des nervures transversales (15) sont prévues dans les fentes longitudinales (13a,13b) de la gaine de cheville (9,11) dans le secteur de la zone d'expansion (14) .
